# EUROPÄISCHE PATENTANMELDUNG

(11) **EP 1 136 297 A1**
(43) Veröffentlichungstag der Anmeldung: **26.09.2001**
(21) Anmeldenummer: 00106127.4
(22) Anmeldetag: 21.03.2000
(51) Int. Cl.: B60J 10/00, E06B 7/23

(54) **Verglasungsdichtung**

(71) Anmelder: DIPRO Dichtungssysteme GmbH, 26871 Papenburg (DE)
(72) Erfinder: Forstner, Holger, 26871 Aschendorf (DE)
(74) Vertreter: Kehl, Günther, Dipl.-Phys.

(57) **Zusammenfassung**

Eine Verglasungsdichtung (1) mit einem Haltefuß (2) zur Verankerung der Dichtung in einer Haltenut weist eine Dichtlippe (3) und einen Dichtwulst (4) auf. Der Dichtwulst enthält einen Schaumkern. Mit der Verglasungsdichtung können große Spaltweiten überbrückt werden.

## Beschreibung

Die Erfindung betrifft eine Verglasungsdichtung mit einem Haltefuß zur Verankerung der Dichtung in einer Haltenut, mit einer Dichtlippe und einem Dichtwulst.

Derartige Dichtungen sind beispielsweise aus der EP-B-0 247 533 bekannt.

Bei Verglasungsdichtungen, die zum Abdichten und zur Befestigung einer Glasscheibe in einem Fensterrahmen verwendet werden, besteht schon immer ein wesentliches Problem darin, daß derartige Verglasungsdichtungen im Laufe der Zeit gewissen Erscheinungen von Materialermüdung unterworfen sind. Abhängig von den gewählten Einsatzgebieten können derartige Verglasungsdichtungen erheblichen klimatischen Schwankungen, wie etwa großen Temperaturunterschieden, unterliegen, was bislang dazu führte, daß das für die Verglasungsdichtungen verwendete Material im Laufe der Zeit ermüdete und mithin die für eine ordnungsgemäße Dichtfunktion erforderlichen Eigenschaften verlor.

Unabhängig von der vorstehend diskutierten Frage der Materialermüdung ließen die in der Vergangenheit für Verglasungsdichtungen verwendeten Vollmaterialien auch im Hinblick auf die Funktion der Wärmedämmung sowie auf die Funktion des Schallschutzes einiges zu wünschen übrig. Dies lag unter anderem daran, daß die Rückstelleigenschaften der eingesetzten Vollmaterialien nicht so gut waren, daß stets in vollem Maße gewährleistet war, daß die Verglasungsdichtungen ihren ursprünglichen Anpreßdruck behielten.

Gerade bei erfolgter Alterung des Vollmaterials der Verglasungsdichtungen waren demzufolge die für eine ordnungsgemäße Dichtfunktion überaus relevanten Rückstelleigenschaften alles in allem unbefriedigend, was beispielsweise zur Folge haben konnte, daß eine zuverlässige und formstabile Befestigung der Verglasungsdichtungen nicht mehr gewährleistet war, vor allem wenn sich die Spaltweiten zwischen der Fensterscheibe und dem Rahmenteile beispielsweise infolge von Temperaturänderungen änderten. Dies hatte oftmals ein abschnittsweises Ablösen der Verglasungsdichtungen zur Folge, so daß die Verglasungsdichtungen nicht mehr ihre Abdicht- bzw. Schutzfunktion erfüllen konnten und es zum unerwünschten Eintritt von Wind, Schmutz, Wasser oder dergleichen kam. Die Verglasungsdichtungen nach dem Stand der Technik sind darüber hinaus meist nur für präzise definierte Spaltweiten geeignet. Für jede vorgegebene konstruktionsbedingte Spaltweite muß eine passende Verglasungsdichtung eigens bereitgehalten werden, was eine umfangreiche Lagerhaltung erforderte.

Des weiteren erwies es sich bei den nach dem Stand der Technik bekannten Verglasungsdichtungen als nachteilig, daß gleichmäßig dünne Wandstärken praktisch nicht verwirklicht werden konnten.

Die DE 89 07 191 U1 offenbart eine elastische Strangdichtung für Fenster, Türen oder dergleichen, die einen Profilkörper mit Schutzfolie aufweist, wobei der Profilkörper und die Schutzfolie jeweils aus einem thermoplastischen Elastomer bestehen, dessen Elastomeranteile untereinander voll vernetzt, von den Elastomeranteilen des jeweils anderen thermoplastischen Elastomers jedoch getrennt sind, wobei ferner die beiden thermoplastischen Elastomere voneinander verschieden sind.

Ausgehend von den vorgenannten Unzulänglichkeiten liegt der vorliegenden Erfindung die Aufgabe zugrunde, eine Verglasungsdichtung bereitzustellen, die sowohl unter normalen Einsatzbedingungen als auch bei erhöhter Beanspruchung infolge verstärkten Anpressdrucks optimale Rückstelleigenschaften offenbart.

In diesem Zusammenhang wird ergänzend angestrebt, durch die vorliegende Erfindung die Eigenschaften der Verglasungsdichtung sowohl im Hinblick auf die Funktion der Wärmedämmung als auch im Hinblick auf die Funktion des Schallschutzes zu verbessern.

Des weiteren zielt die vorliegende Erfindung darauf ab, Verglasungsdichtungen, insbesondere für Kunststoff- oder Aluminiumfenster bereitzustellen, deren Materialien auch bei langjähriger Beanspruchung nach Möglichkeit keinerlei Ermüdungserscheinungen unterliegen. Dies wird auch für den Einsatz unter extremen klimatischen Bedingungen, wie etwa großen Temperaturunterschieden, angestrebt.

Die Verglasungsdichtung soll darüber hinaus eine große Spaltweitentoleranz aufweisen, so daß ein und derselbe Dichtungstyp für einen breiten Bereich von Dichtungsspaltweiten verwendet werden kann und gleichwohl eine dauerhafte und solide Abdichtung gewährleistet ist.

Diese Aufgaben werden erfindungsgemäß dadurch gelöst, dass der Dichtwulst einen Schaumkern aufweist.

Die Verglasungsdichtung gemäß der vorliegenden Erfindung offenbart sowohl unter normalen Einsatzbedingungen als auch bei erhöhter Beanspruchung infolge verstärkten Anpressdrucks optimale Rückstelleigenschaften.

Hierbei wird sowohl im Hinblick auf die Funktion der Wärmedämmung als auch im Hinblick auf die Funktion des Schallschutzes durch die vorstehend dargelegte Verglasungsdichtung eine Optimierung erzielt.

Des weiteren stellt die vorliegende Erfindung eine Verglasungsdichtung bereit, bei der sich selbst bei langjähriger Beanspruchung so gut wie keine Materialermüdung einstellt. Sollte es wider Erwarten etwa bei erheblichen klimatischen Schwankungen, wie zum Beispiel großen Temperaturunterschieden, doch einmal zu einer Materialermüdung kommen, so hält sich diese bei der Strangdichtung gemäß der vorliegenden Erfindung in solch engen Grenzen, daß die ordnungsgemäße Abdicht- und Schutzfunktion der Verglasungsdichtung aufgrund ihrer stets vorzüglichen elastischen Eigenschaften praktisch nicht beeinträchtigt wird.

Nach einer vorteilhaften Ausgestaltungsform der Erfindung ist der Schaumkern von einer Ummantelung umgeben, die vorzugsweise aus einem nichtgeschäumten elastischen Vollmaterial besteht. Durch eine derartige, glatt ausgebildete Ummantelung wird das geschäumte Material abgeschlossen, was einerseits einen vorzüglichen Schutz gegen Verunreinigungen bietet und andererseits ein ebenes, sattes und vollflächiges Anliegen der Verglasungsdichtung an Gegenflächen bewirkt.

In weiterer Ausgestaltung der Erfindung ist der Schaumkern mit einem zentralen Hohlraum versehen. Das Vorsehen eines solchen Hohlraumes hat die vorteilhafte Wirkung, dass sich bei unterschiedlichen Spaltweiten nur vergleichsweise geringfügige Änderungen des Anpressdruckes ergeben und somit sichergestellt ist, dass auch bei sehr großen Spaltweiten noch ein ausreichend starker Anpressdruck vorliegt und andererseits bei kleinen Spaltweiten der Anpressdruck sich in akzeptierbaren Grenzen hält.

Nach einer weiteren vorteilhaften Ausführungsform ist vorgesehen, die Verglasungsdichtung aus Materialien zu fertigen, die mit Fensterprofilen aus Hart-PVC verschweissbar sind. Hierfür kommen beispielsweise thermoplastische Elastomere in Frage. Somit können die Fensterprofile zusammen mit der in die Aufnahmenut eingefädelten Verglasungsdichtung auf Gehrung geschnitten und verschweisst werden, wobei sich im Gehrungsbereich eine gute Verbing zwischen der Dichtung und den Fensterprofilen ergibt.

Ebenso ist es von Vorteil, wenn die Dichtung aus unter sich verschweissbaren Materialien besteht, damit diese vor dem Einsetzen in die Haltenut eines Fensterrahmens zu einem kompletten Rahmen verschweisst und dann zusammenhängend in die Haltenut eingefügt werden kann.

Nach einer weiteren vorteilhaften Ausgestaltung ist vorgesehen, dass die Ummantelung aus dem gleichen Material wie die Dichtlippe besteht, bei dem es sich vorzugsweise um ein thermoplastisches Elastomer oder Polyolefine handeln kann.

Es hat sich dagegen als besonders vorteilhaft erwiesen, den Haltefuß aus einem wesentlich härteren Material als die Dichtlippe zu fertigen. Dadurch wird erreicht, dass beim Einziehen der Dichtung in eine Haltenut eine Längenausdehnung und somit ein Überdehnen der Dichtung vermieden wird. Dies ist besonders bei automatischen Einziehvorgängen von großer Bedeutung. Hierzu weist der Haltefuß vorzugsweise eine Shore-A-Härte von 70° - 95° auf. Ein auf diese Weise gebauter Haltefuß sorgt für einen leichten und reibungslosen Einbau der Dichtung.

Die Dichtung wird dabei durch Koextrusion von drei verschiedenen Werkstoffen hergestellt, nämlich einem relativ hartem Vollmaterial für den Dichtungsfuß, einem vergleichsweise weichen Vollmaterial für die Dichtlippe und die Ummantelung des Schaumkerns und letzlich aus dem Material des Schaumkerns.

Nach einer besonders vorteilhaften Weiterbildung der Erfindung, ist vorgesehen, dass der Schaumkern zumindest teilweise aus geschäumtem Material besteht, das mindestens ein thermoplastisches Elastomer (TPE) sowohl mit weichen, elastischen Segmenten hoher Dehnbarkeit als auch mit harten, kristallisierbaren Segmenten geringer Dehnbarkeit aufweist und auf folgende Weise herstellbar ist:
a) Aufschmelzen des thermoplastischen Elastomers (TPE) zur Erzeugung einer Schmelze;
b) Extrudieren der Schmelze in dünne Schichten, Stränge oder dergleichen;
c) Eindüsen von Wasserdampf und/oder von anderen Flüssigkeiten; und
d) Extrudieren der mit Wasserdampf und/oder mit anderen Flüssigkeiten versetzten Schmelze zur Bildung der Strangdichtung.

Nach einer bevorzugten Ausführungsform der vorliegenden Erfindung weist das geschäumte Material eine Dichte von etwa 10 kg/m³ bis etwa 100 kg/m³ auf, wobei sich eine Dichte von etwa 20 kg/m³ bis etwa 92 kg/m³ als besonders vorteilhaft erweist. Als sehr guter Wert für das geschäumte Material muß in diesem Zusammenhang eine Dichte von etwa 35 kg/m³ angesehen werden.

Gemäß einer vorteilhaften Ausgestaltungsform der vorliegenden Erfindung weist das geschäumte Material eine Porengröße von etwa 0,1 mm bis etwa 1 mm auf, wobei insbesondere eine Porengröße von etwa 0,1 mm bis etwa 0,5 mm bevorzugt wird. Hervorhebenswert positive Ergebnisse lassen sich hierbei erzielen, wenn das geschäumte Material eine Porengröße von etwa 0,2 mm aufweist und als geschlossenzelliges Schaummaterial ausgebildet ist.

Vorteilhafterweise sind die weichen, elastischen Segmente und die harten, kristallisierbaren Segmente miteinander unverträglich und liegen als individuelle, sich nicht durchdringende Phasen vor. Hierbei können die weichen, elastischen Segmente eine niedrige Glasübergangstemperatur (T_{g}) aufweisen, wohingegen die harten, kristallisierbaren Segmente eine hohe Glasübergangstemperatur (T_{g}) aufweisen können. Unabhängig hiervon oder in Verbindung hiermit kann eine Neigung der harten, kristallisierbaren Segmente zur Assoziatbildung (Vernetzung) erkennbar sein.

Gemäß einer vorteilhaften Ausformung der vorliegenden Erfindung sind die weichen, elastischen Segmente und die harten, kristallisierbaren Segmente Bestandteile eines einzigen Makromoleküls. Alternativ hierzu können die weichen, elastischen Segmente und die harten, kristallisierbaren Segmente in mikroheterogener Phasenverteilung von Elastomeren in Thermoplasten vorliegen.

Ist das thermoplastische Elastomer (TPE) vom Styroltyp, so sind folgende Ausgestaltungsvarianten denkbar:
- das thermoplastische Elastomer (TPE) ist SBS, wobei die weichen, elastischen Segmente Butadien und die harten, kristallisierbaren Segmente Styrol aufweisen;
- das thermoplastische Elastomer (TPE) ist SIS, wobei die weichen, elastischen Segmente Isopren und die harten, kristallisierbaren Segmente Styrol aufweisen; oder
- das thermoplastische Elastomer (TPE) ist SEBS, wobei die weichen, elastischen Segmente Ethylenbutylen und die harten, kristallisierbaren Segmente Styrol aufweisen.

Ist das thermoplastische Elastomer (TPE) eine Elastomerlegierung, so sind folgende Ausgestaltungsvarianten denkbar:
- das thermoplastische Elastomer (TPE) ist EPDM/PP, wobei die weichen, elastischen Segmente vernetztes EPDM (= Ethylen/Propylen-Dien-Terpolymere) und die harten, kristallisierbaren Segmente Propylen aufweisen;
- das thermoplastische Elastomer (TPE) ist NR/PP, wobei die weichen, elastischen Segmente vernetzten NR (= Isopren-Kautschuk = Naturkautschuk) und die harten, kristallisierbaren Segmente Propylen aufweisen;
- das thermoplastische Elastomer (TPE) ist EVA/PVDC, wobei die weichen, elastischen Segmente Ethylenvinylacetat und die harten, kristallisierbaren Segmente Vinylidenchlorid aufweisen; oder
- das thermoplastische Elastomer (TPE) ist NBR/PP, wobei die weichen, elastischen Segmente vernetzten NBR (= Acrylnitril-Butadien-Kautschuk) und die harten, kristallisierbaren Segmente Propylen aufweisen.

Gemäß alternativen Ausführungsformen der vorliegenden Erfindung kann das thermoplastische Elastomer (TPE)
- ein Polyurethan sein, wobei die weichen, elastischen Segmente Esterglykole bzw. Etherglykole und die harten, kristallisierbaren Segmente Isocyanat-Kettenverlängerer und/oder Wasserstoffbindungen aufweisen;
- ein Polyetherester sein, wobei die weichen, elastischen Segmente Alkylenglykol und die harten, kristallisierbaren Segmente Alkylenterephthalat aufweisen; oder
- ein Polyetheramid sein, wobei die weichen, elastischen Segmente Etherdiole und die harten, kristallisierbaren Segmente Amide aufweisen.

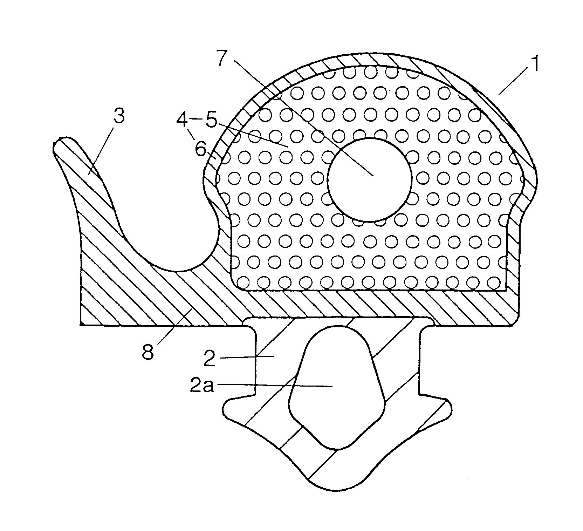

Weitere Ausgestaltungen, Merkmale und Vorteile der vorliegenden Erfindung werden nachstehend anhand des in der Figur exemplarisch veranschaulichten Ausführungsbeispiels näher erläutert. Die Figur zeigt eine (stark vergrößert dargestellte) Querschnittsansicht eines Ausführungsbeispiels einer Verglasungsdichtung gemäß der vorliegenden Erfindung im entspannten Zustand.

Die in der Figur dargestellte Verglasungsdichtung 1 weist einen pfeilförmigen Haltefuß 2 auf, mit dem die Dichtung in einer entsprechenden Haltenut eines Kunststoff- oder Aluminiumfensterrahmens befestigt werden kann. Der Haltefuß ist aus einem besonders harten Material, nämlich einem Vollmaterial mit einer Shore-A-Härte von 70 - 95° gefertigt. Um das Einfädeln des Haltefußes in die Haltenut zu erleichtern, weist der Haltefuß einen Hohlraum 2a auf, der eine entsprechende Nachgiebigkeit des Haltefußes beim Einpressen in die Haltenut gewährleistet. Der Haltefuß 2 ist mit einem Basiskörper 8 verbunden, der sich quer zur Längsachse des Haltefußes erstreckt. An einer Seite (in der in der Figur links gezeichneten Seite) geht der Basiskörper 8 in eine leicht gebogene Dichtlippe 3 über. Aus dem gleichen Material wie der Basiskörper 8 und die Dichtlippe 3 ist die Ummantelung 6 eines Dichtwulstes 4 gefertigt, der von der Ummantelung 6 vollständig umschlossen wird.

Die in der Figur schematisch dargestellte Verglasungsdichtung gemäß der vorliegenden Erfindung weist einen Schaumkern 5 auf, der aus geschäumtem Material besteht, das mindestens ein thermoplastisches Elastomer TPE) sowohl mit weichen, elastischen Segmenten hoher Dehnbarkeit als auch mit harten, kristallisierbaren Segmenten geringer Dehnbarkeit aufweist und auf folgende Weise herstellbar ist:
a) Aufschmelzen des thermoplastischen Elastomers TPE) zur Erzeugung einer Schmelze;
b) Extrudieren der Schmelze in dünne Schichten, Stränge oder dergleichen;
c) Eindüsen von Wasserdampf und/oder von anderen Flüssigkeiten; und
d) Extrudieren der mit Wasserdampf und/oder mit anderen Flüssigkeiten versetzten Schmelze zur Bildung der Strangdichtung.

Der Schaumkern 5 sorgt in Verbindung mit einem im zentralen Bereich des Schaumkerns 5 vorgesehenen Hohlraum 7 für eine große Spaltweitentoleranz. Hierzu trägt auch die Form des Dichtwulstes 4 bei, die an der Anlagefläche näherungsweise im entspannten Zustand die Form eines Halbkreises aufweist. Auch die Abmessungen des Dichtwulstes, der besonders breit ausgelegt ist, derart dass seine Breite etwa das 1,3 bis 1,7-fache seiner Höhe beträgt, führt zu den angestrebten hohen Spaltweitentoleranzen. Der Hohlraum 7, der etwa in der Mitte des Schaumkerns 5 liegt, weist einen Durchmesser von etwa einem Drittel bis einem Fünftel, vorzugsweise etwa ein Viertel des Dichwulstes 4 auf.

Die Ummantelung 6, die mit dem Schaumkern 5 durch Koextrusion verbunden ist, besteht hierbei aus Vollmaterial, das nicht geschäumt und wesentlich härter als das geschäumte Material ist.

Die Dichtlippe 3 ist von außen sichtbar. Sie ist daher glatt und kann eine gewünschte Farbe aufweisen.

Im eingebauten Zustand wird der Schaumkern 5 zusammengedrückt und bildet die Dichtungsebene, wobei sich zwischen Dichtlippe 3 und Schaumkern 5 eine Wassersammelkammer bildet, die eine zusätzliche Dichtwirkung erreicht. Es handelt sich somit um eine Zweistufenabdichtung. Der Schaumkern 5 ist so gestaltet, dass er, insbesondere durch seine Weichheit, große Toleranzen überbrücken kann.

## Patentansprüche

1. Verglasungsdichtung (1) mit einem Haltefuß (2) zur Verankerung der Dichtung in einer Haltenut, mit einer Dichtlippe (3) und einem Dichtwulst (4), **dadurch gekennzeichnet, dass** der Dichtwulst einen Schaumkern (5) aufweist.

2. Verglasungsdichtung nach Anspruch 1, dass der Dichtwulst dem Haltefuß gegenüberliegt.

3. Verglasungsdichtung nach Anspruch 1 oder 2, **dadurch gekennzeichnet, dass** der Schaumkern von einer Ummantelung umgeben ist.

4. Verglasungsdichtung nach einem der vorhergehenden Ansprüche, **dadurch gekennzeichnet, dass** der Schaumkern (5) einen Hohlraum (7) enthält.

5. Verglasungsdichtung nach einem der vorhergehenden Ansprüche, **dadurch gekennzeichnet, dass** sie aus verschweissbaren Materialien besteht, so dass sie vor dem Einfädeln in eine Haltenut zu einem geschlossenen Rahmen verschweissbar ist.

6. Verglasungsdichtung nach einem der vorhergehenden Ansprüche, **dadurch gekennzeichnet, dass** sie aus Materialien besteht, die mit Hart-PVC verschweissbar sind.

7. Verglasungsdichtung nach einem der vorhergehenden Ansprüche, **dadurch gekennzeichnet, dass** die Ummantelung (6) und die Dichtlippe (3) aus einem thermoplastischen Elastomer oder aus Polyolefinen bestehen.

8. Verglasungsdichtung nach einem der vorhergehenden Ansprüche, **dadurch gekennzeichnet, dass** der Haltefuß (2) aus einem wesentlich härteren Material als die Dichtlippe (3) gefertigt ist.

9. Verglasungsdichtung nach Anspruch 8 **dadurch gekennzeichnet, dass** der Haltefuß (2) eine Shore-A-Härte von 70° - 95° aufweist.

10. Verglasungsdichtung nach Anspruch 8 **dadurch gekennzeichnet, dass** die Dichtlippe (3) eine Shore-A-Härte von 50° - 80° aufweist.

11. Verglasungsdichtung nach einem der vorhergehenden Ansprüche, **dadurch gekennzeichnet, dass** sie durch Koextrusion von drei verschiedenen Werkstoffen hergestellt ist.

12. Verglasungsdichtung nach einem der vorhergehenden Ansprüche, **dadurch gekennzeichnet, dass** der Schaumkern ein thermoplastisches Elastomer (TPE) enthält, das sowohl weiche, elastische Segmente hoher Dehnbarkeit als auch harte, kristallisierbare Segmente geringer Dehnbarkeit aufweist und auf folgende Weise herstellbar ist:
a) Aufschmelzen des thermoplastischen Elastomers (TPE) zur Erzeugung einer Schmelze;
b) Extrudieren der Schmelze in dünne Schichten, Stränge oder dergleichen;
c) Eindüsen von Wasserdampf und/oder von anderen Flüssigkeiten; und
d) Extrudieren der mit Wasserdampf und/oder mit anderen Flüssigkeiten versetzten Schmelze zur Bildung der Verglasungsdichtung.

13. Verglasungsdichtung nach einem der vorhergehenden Ansprüche, **dadurch gekennzeichnet, dass** das geschäumte Material eine Dichte von etwa 10 kg/m³ bis etwa 100 kg/m³ aufweist.

14. Verglasungsdichtung nach einem der vorhergehenden Ansprüche, **dadurch gekennzeichnet, dass** das geschäumte Material eine Dichte von etwa 20 kg/m³ bis etwa 92 kg/m³ aufweist.

15. Verglasungsdichtung nach einem der vorhergehenden Ansprüche, **dadurch gekennzeichnet, dass** das geschäumte Material eine Dichte von etwa 35 kg/m³ aufweist.

16. Verglasungsdichtung nach einem der vorhergehenden Ansprüche, **dadurch gekennzeichnet, dass** das geschäumte Material eine Porengröße von etwa 0,1 mm bis etwa 1 mm aufweist.

17. Verglasungsdichtung nach einem der vorhergehenden Ansprüche, **dadurch gekennzeichnet, dass** das geschäumte Material eine Porengröße von etwa 0,1 mm bis etwa 0,5 mm aufweist.

18. Verglasungsdichtung nach einem der vorhergehenden Ansprüche, **dadurch gekennzeichnet, dass** das geschäumte Material eine Porengröße von etwa 0,2 mm aufweist.

19. Verglasungsdichtung nach einem der vorhergehenden Ansprüche, **dadurch gekennzeichnet, dass** das geschäumte Material geschlossenzellig ist.

20. Verglasungsdichtung nach einem der vorhergehenden Ansprüche, **dadurch gekennzeichnet, dass** die weichen, elastischen Segmente und die harten, kristallisierbaren Segmente miteinander unverträglich sind und als individuelle, sich nicht durchdringende Phasen vorliegen.

21. Verglasungsdichtung nach einem der vorhergehenden Ansprüche, **dadurch gekennzeichnet, dass** die weichen, elastischen Segmente eine niedrige Glasübergangstemperatur (T_{g}) aufweisen.

22. Verglasungsdichtung nach einem der vorhergehenden Ansprüche, **dadurch gekennzeichnet, dass** die harten, kristallisierbaren Segmente eine hohe Glasübergangstemperatur (T_{g}) aufweisen.

23. Verglasungsdichtung nach einem der vorhergehenden Ansprüche, **dadurch gekennzeichnet, dass** die weichen, elastischen Segmente und die harten, kristallisierbaren Segmente in mikroheterogener Phasenverteilung von Elastomeren in Thermoplasten vorliegen.

24. Verglasungsdichtung nach einem der vorhergehenden Ansprüche, **dadurch gekennzeichnet, dass** das thermoplastische Elastomer (TPE) vom Styroltyp ist.

25. Verglasungsdichtung nach einem der vorhergehenden Ansprüche, **dadurch gekennzeichnet, dass** das thermoplastische Elastomer (TPE) SBS ist, wobei die weichen, elastischen Segmente Butadien und die harten, kristallisierbaren Segmente Styrol aufweisen.

26. Verglasungsdichtung nach einem der vorhergehenden Ansprüche, **dadurch gekennzeichnet, dass** das thermoplastische Elastomer (TPE) SIS ist, wobei die weichen, elastischen Segmente Isopren und die harten, kristallisierbaren Segmente Styrol aufweisen.

27. Verglasungsdichtung nach einem der vorhergehenden Ansprüche, **dadurch gekennzeichnet, dass** das thermoplastische Elastomer (TPE) SEBS ist, wobei die weichen, elastischen Segmente Ethylenbutylen und die harten, kristallisierbaren Segmente Styrol aufweisen.

28. Verglasungsdichtung nach einem der vorhergehenden Ansprüche, **dadurch gekennzeichnet, dass** das thermoplastische Elastomer (TPE) eine Elastomerlegierung ist.

29. Verglasungsdichtung nach einem der vorhergehenden Ansprüche, **dadurch gekennzeichnet, dass** das thermoplastische Elastomer (TPE) EPDM/PP ist, wobei die weichen, elastischen Segmente vernetztes EPDM (= Ethylen/Propylen-Dien-Terpolymere) und die harten, kristallisierbaren Segmente Propylen aufweisen.

30. Verglasungsdichtung nach einem der vorhergehenden Ansprüche, **dadurch gekennzeichnet, dass** das thermoplastische Elastomer (TPE) NR/PP ist, wobei die weichen, elastischen Segmente vernetzten NR (= lsopren-Kautschuk = Naturkautschuk) und die harten, kristallisierbaren Segmente Propylen aufweisen.

31. Verglasungsdichtung nach einem der vorhergehenden Ansprüche, **dadurch gekennzeichnet, dass** das thermoplastische Elastomer (TPE) EVA/PVDC ist, wobei die weichen, elastischen Segmente Ethylenvinylacetat und die harten, kristallisierbaren Segmente Vinylidenchlorid aufweisen.

32. Verglasungsdichtung nach einem der vorhergehenden Ansprüche, **dadurch gekennzeichnet, dass** das thermoplastische Elastomer (TPE) NBR/PP ist, wobei die weichen, elastischen Segmente vernetzten NBR (= Acrylnitril-Butadien-Kautschuk) und die harten, kristallisierbaren Segmente Propylen aufweisen.

33. Verglasungsdichtung nach einem der vorhergehenden Ansprüche, **dadurch gekennzeichnet, dass** das thermoplastische Elastomer (TPE) ein Polyurethan ist, wobei die weichen, elastischen Segmente Esterglykole bzw. Etherglykole und die harten, kristallisierbaren Segmente Isocyanat-Kettenverlängerer und/oder Wasserstoffbindungen aufweisen.

34. Verglasungsdichtung nach einem der vorhergehenden Ansprüche, **dadurch gekennzeichnet, dass** das thermoplastische Elastomer (TPE) ein Polyetherester ist, wobei die weichen, elastischen Segmente Alkylenglykol und die harten, kristallisierbaren Segmente Alkylenterephthalat aufweisen.

35. Verglasungsdichtung nach einem der vorhergehenden Ansprüche, **dadurch gekennzeichnet, dass** das thermoplastische Elastomer (TPE) ein Polyetheramid ist, wobei die weichen, elastischen Segmente Etherdiole und die harten, kristallisierbaren Segmente Amide aufweisen.
